# EUROPÄISCHE PATENTSCHRIFT

(11) **EP 0 856 295 B1**
(45) Veröffentlichungstag und Bekanntmachung des Hinweises auf die Patenterteilung: **08.12.2004**
(21) Anmeldenummer: 97116277.1
(22) Anmeldetag: 18.09.1997
(51) Int. Cl.: A61C 3/06, B24D 7/12

(54) **Schleifwerkzeug für Dentalzwecke**
Dental grinding tool
Outil de meulage dentaire

(30) Priorität: 10.01.1997 DE 19700636
(43) Veröffentlichungstag der Anmeldung: 05.08.1998
(73) Patentinhaber: Gebr. Brasseler GmbH & Co. KG, D-32657 Lemgo (DE)
(72) Erfinder: Schön, Jürgen, 32689 Kalletal (DE); Küllmer, Michael, 32657 Lemgo (DE); Danger, Karl-Heinz, 32758 Detmold (DE)
(74) Vertreter: Weber, Joachim, Dr.

(56) Entgegenhaltungen:
- EP-A- 0 439 124
- WO-A-96/13358
- US-A- 2 749 681
- US-A- 3 420 007
- US-A- 4 661 064

## Beschreibung

Die Erfindung bezieht sich auf ein Schleifwerkzeug für Dentalzwecke gemäß dem Oberbegriff des Hauptanspruchs.

Im Dentalbereich sind, beispielsweise bei der Präparation von Zähnen und Zahnersatz, vielfältige Arbeiten durchzuführen, welche den Einsatz eines Schleifwerkzeuges erfordern. Derartige vorzugsweise mit Diamant-Partikeln belegte Schleifwerkzeuge sind in unterschiedlichsten Ausgestaltungsformen vorbekannt. Dabei müssen die Schleifwerkzeuge sehr dünn sein, um extrem dünne Schnitte ausführen zu können, sie müssen flexibel sein, um gewölbte, dreidimensionale Flächen bearbeiten zu können und sie müssen sich durch ein ausreichendes Maß an Stabilität auszeichnen.

Die erfindungsgemäßen rotierenden Schleifwerkzeuge sind im Dentallabor anwendbar, die streifenförmigen Schleifwerkzeuge sind in einer Zahnarztpraxis und im Dentallabor anwendbar. Es sind hauptsächlich zwei unterschiedliche Schleifwerkzeug-Ausgestaltungen bekannt. Bei der einen Ausgestaltung handelt es sich um ein rotierendes, mit einem Schaft versehenes, kreisscheibenförmiges Werkzeug, während in einer anderen Ausgestaltung Streifen verwendet werden, die mit abrasiven Partikeln belegt sind.

Weiterhin ist es somit wünschenswert, dass die Schleifscheibe mit Ausnehmungen versehen ist, damit der Zahntechniker oder Zahnarzt durch die rotierende Scheibe durchblicken und die zu bearbeitende Oberfläche betrachten kann. Diese Ausnehmungen sind als relativ große, im zentrischen Bereich angeordnete Löcher ausgestaltet.

Die WO 96/73358 zeigt Schleifscheiben, die gitterartig aufgebaut sind. Das Gitter umfasst eine gewebte oder gewirkte Grundstruktur, auf welche die abrasive Beschichtung aufgebracht ist. Es handelt sich um typische Trenn- und Schleifscheiben, welche zum Trennschleifen oder zur groben Oberflächenbearbeitung auf Baustellen eingesetzt werden.

Die EP 0 439 124 A2 zeigt eine starre Schleifscheibe, die zur Herstellung von Halbleiter-Wafern verwendet wird. Auf der Oberfläche der Schleifscheibe sind unterschiedliche Anordnungen von Ausnehmungen vorgesehen, beispielsweise Nuten, Vertiefungen oder Ähnliches, die dazu dienen, eine konstante Bearbeitungsfläche bei einer Bewegung der Schleifscheibe relativ zu den Wafern zu gewährleisten.

Der Erfindung liegt die Aufgabe zugrunde, ein Schleifwerkzeug der eingangs genannten Art zu schaffen, welches bei einfacher Herstellbarkeit und betriebssicherer Anwendbarkeit ein hohes Maß an Flexibilität aufweist und dem Benutzer die Betrachtung der zu bearbeitenden Oberfläche ermöglicht.

Erfindungsgemäß wird die Aufgabe durch die Merkmale des Hauptanspruchs gelöst.

Die Unteransprüche zeigen weitere vorteilhafte Ausgestaltungen der Erfindung.

Das erfindungsgemäße Schleifwerkzeug zeichnet sich durch eine Reihe erheblicher Vorteile aus. Die Wabenstruktur ermöglicht es zum einen, eine Vielzahl von Ausnehmungen vorzusehen, durch welche der Betrachter bei der rotierenden Schleifscheibe blicken kann. Zum anderen gewährleistet die Wabenstruktur ein ausreichendes Maß an Stabilität und Festigkeit, so dass ein unbeabsichtigtes Ausbrechen oder ähnliches vermieden wird. Weiterhin wird durch die Wabenstruktur ein Höchstmaß an Flexibilität, insbesondere in dem Bereich, der mit dem abrasiven Material belegt ist, sichergestellt. Das erfindungsgemäße Schleifwerkzeug kann somit auch zum Bearbeiten von stark gekrümmten Flächen eingesetzt werden, ohne dass der Trägerkörper bleibend verformt wird.

Ein weiterer Vorteil ergibt sich daraus, dass durch die Wabenstruktur zusätzlicher Spanraum gebildet wird.

Weiterhin ist vorgesehen, dass die Wabenstruktur von Stegen begrenzte Ausnehmungen umfasst. Diese Ausnehmungen sind in Form von Sechsecken ausgestaltet. Es ist möglich, die Ausnehmungen in Form eines gleichmäßigen Musters anzuordnen, sie können jedoch auch teilkreissegmentartig angeordnet sein.

Die Stege sind mit dem abrasiven Material, beispielsweise Diamant-Partikeln belegt sind. Die Aufbringung des abrasiven Materials erfolgt in gleicher Weise, wie aus dem Stand der Technik bekannt, so daß auf eine detaillierte Beschreibung verzichtet werden kann.

Die erfindungsgemäße Wabenstruktur kann auch so ausgebildet sein, daß sie von Stegen begrenzte Ausprägungen umfaßt. Diese sind Sicken-artig ausgestaltet und erhöhen die Stabilität des Trägerkörpers.

Die Größe der einzelnen Waben kann den jeweiligen Anforderungen angepaßt werden, es ist möglich, sehr feine Waben oder großflächigere Waben zu verwenden. Weiterhin können unterschiedliche konzentrische Bereiche des Trägerkörpers mit unterschiedlich ausgestalteten Wabenstrukturen versehen sein. Es ist auch möglich, lediglich an einigen konzentrischen Teilbereichen die Wabenstruktur anzuordnen, diese kann auch nur an segmentartigen Teilbereichen vorgesehen sein. Es versteht sich, daß erfindungsgemäß jedoch der Trägerkörper auch im wesentlichen ganzflächig mit der Wabenstruktur versehen sein kann.

Weiterhin kann es günstig sein, eine Kombination von Wabenstrukturen mit Ausnehmungen bzw. Ausprägungen anzuordnen. So kann es beispielsweise zur Erhöhung der Festigkeit des Trägerkörpers dienen, wenn im zentrischen oder mittleren Bereich nur Ausprägungen vorgesehen sind, während an einem Randbereich die Ausnehmungen angeordnet werden.

Der Trägerkörper ist erfindungsgemäß aus einem metallischen Werkstoff hergestellt sein wobei Verwendung eines metallischen Werkstoffes kann Federbandstahl, Titan, eine Titan-Nickellegierung oder ähnliches zur Anwendung kommen.

Im folgenden wird die Erfindung anhand von Ausführungsbeispiel in Verbindung mit der Zeichnung beschrieben. Dabei zeigt:
- Fig. 1: eine schematische Seitenansicht, im Teilschnitt, eines Ausführungsbeispiel eines erfindungsgemäßen Schleifwerkzeuges,
- Fig. 2: eine Teil-Draufsicht auf das in Fig. 1 gezeigte Werkzeug,
- Fig. 3: eine Draufsicht auf ein weiteres Ausgestaltungsbeispiel eines erfindungsgemäßen Schleifwerkzeugs,
- Fig. 4: eine vergrößerte Detail-Ansicht der in Fig. 3 gezeigten Wabenstruktur,
- Fig. 5: eine Draufsicht, ähnlich Fig. 3, einer abgewandelten Ausgestaltungsform der kein Gegenstand der Erfindung ist,
- Fig. 6: eine Draufsicht, ähnlich den Fig. 3 und 5, auf ein Beispiel mit einer Wabenstruktur mit Ausprägungen welcher kein Gegenstand der Erfindung ist,
- Fig. 7: eine Teil-Ansicht der in Fig. 6 gezeigten Wabenstruktur,
- Fig. 8: eine Draufsicht auf ein weiteres Ausführungsbeispiel einer erfindungsgemäßen Schleifscheibe,
- Fig. 9: eine Draufsicht auf ein Beispiel einer Schleifscheibe der kein Gegenstand der Erfindung ist,
- Fig. 10: eine Draufsicht auf einen erfindungsgemäß ausgebildeten Schleif-Streifen, und
- Fig. 11: eine Seitenansicht des in Fig. 10 gezeigten Streifens.

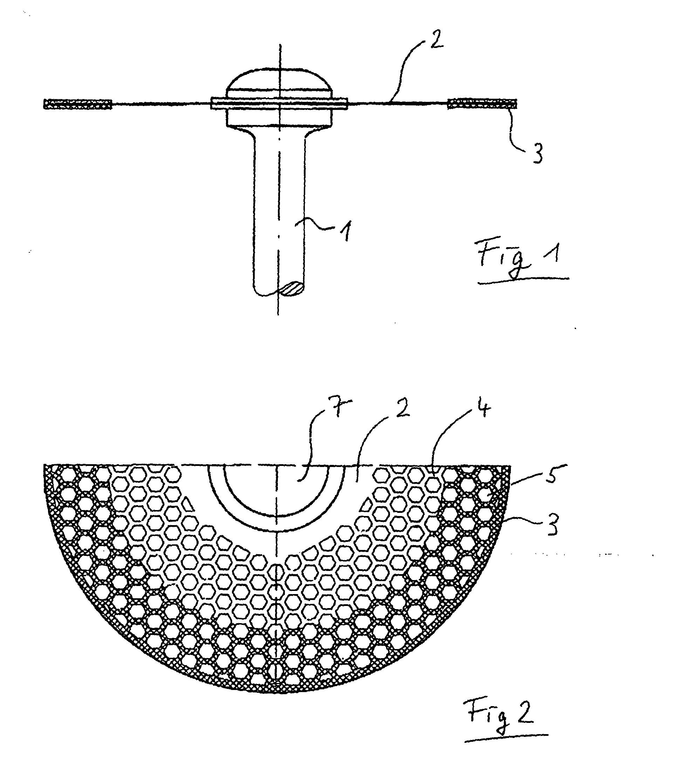

Das erfindungsgemäße, in den Fig. 1-9 gezeigte Schleifwerkzeug umfaßt einen Schaft 1, welcher, wie aus dem Stand der Technik bekannt, in eine Antriebseinrichtung einspannbar ist. Am freien Ende des Schaftes 1 ist ein im wesentlichen kreisplattenförmiger Trägerkörper 2 befestigt, dessen Randbereich, in Form eines konzentrischen Rings, mit einem abrasiven Material 3 belegt ist. Die Belegung ist beidseitig, um sowohl Flächen bearbeiten als auch Schnitte durchführen zu können.

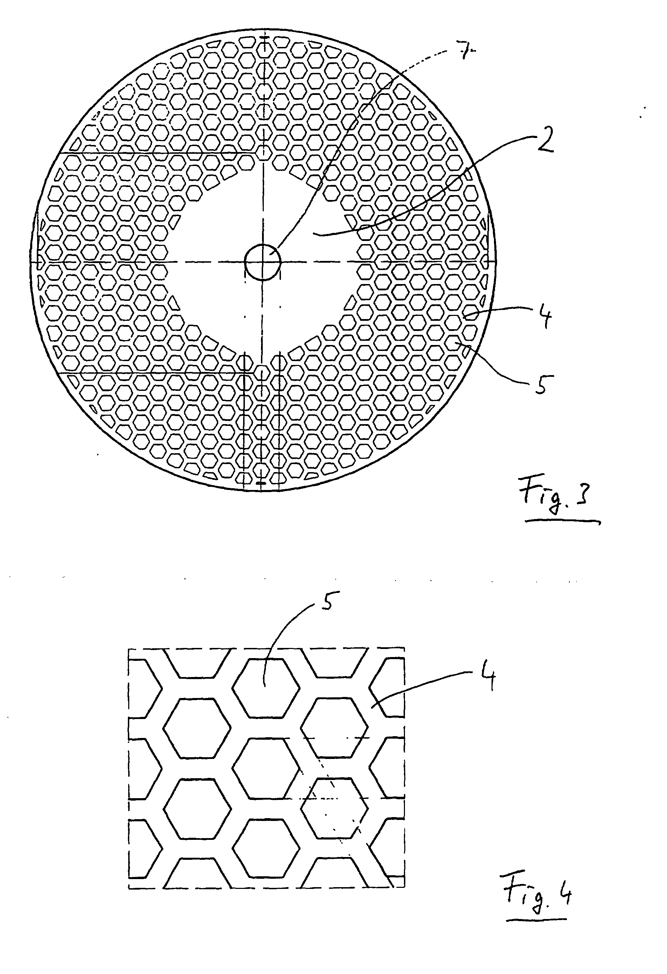

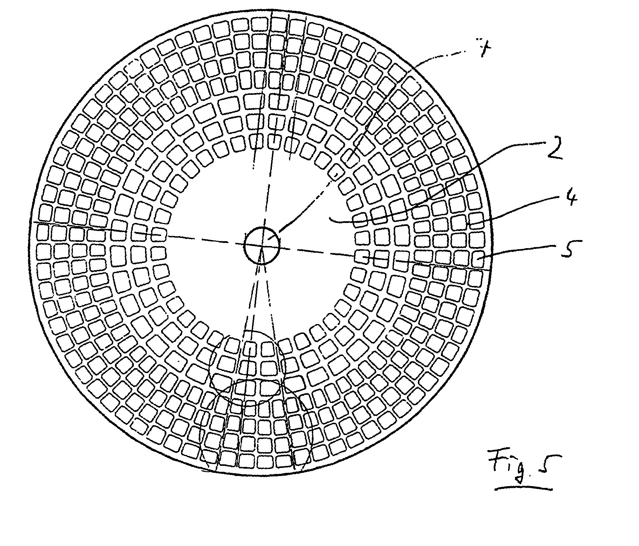

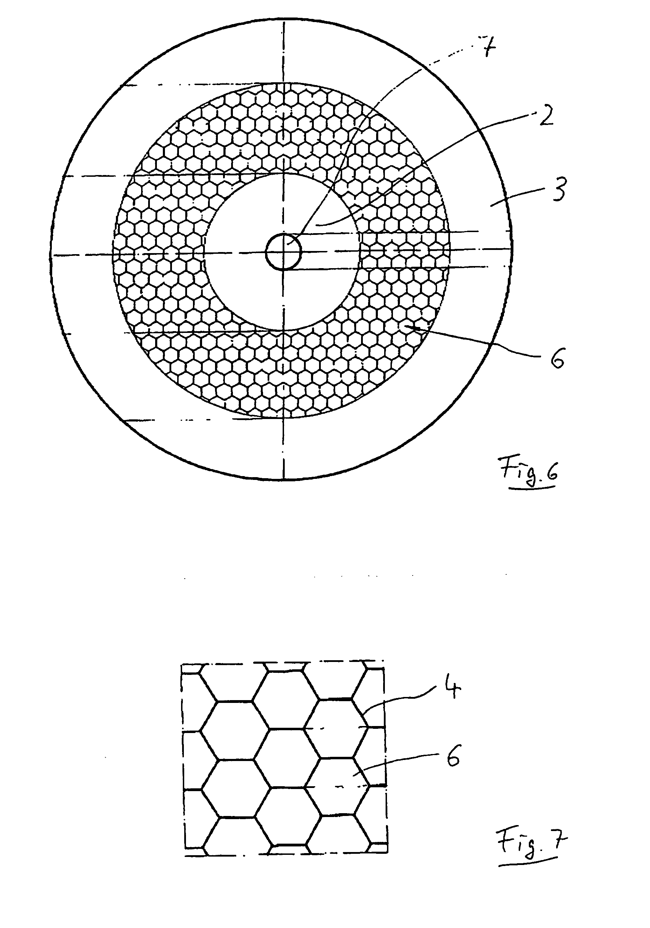

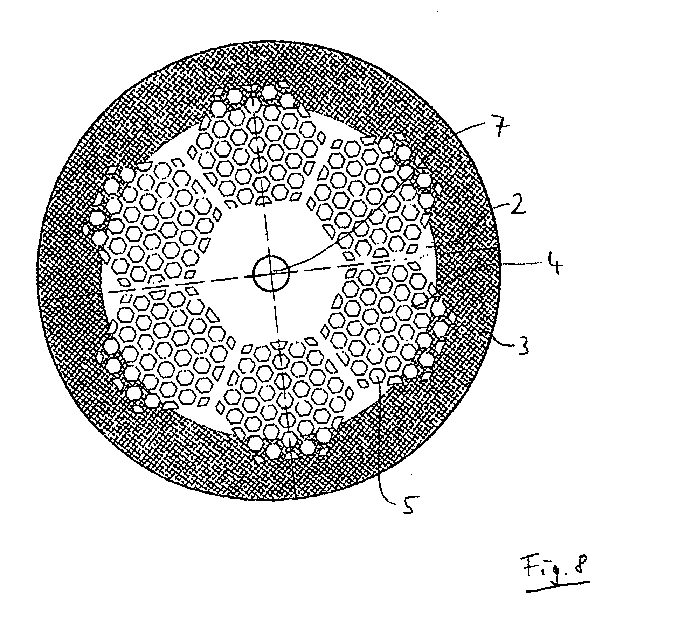

Die Fig. 2 zeigt eine Draufsicht auf das in Fig. 1 gezeigte Dental-Schleifwerkzeug. Im Zentrum ist eine Ausnehmung 7 (Fig. 3) ausgebildet, welche zur Befestigung an dem Schaft 1 dient. Anschließend an den zentrischen Bereich weist der Trägerkörper 2 eine Wabenstruktur auf, welche eine gleichmäßige Anordnung von Sechsecken umfaßt und somit durch Stege 4 und Ausnehmungen 5 gebildet wird.

Ein konzentrischer Randbereich ist, wie bereits in Fig. 1 erläutert, beidseitig mit dem abrasiven Material 3 belegt, dieses ist somit auf die Stege 4 aufgebracht. Die Aufbringung des abrasiven Materials, welches bevorzugterweise Diamant-Körner oder Diamant-Partikel umfaßt, erfolgt wie aus dem Stand der Technik bekannt, beispielsweise elektrolytisch.

Die in den Fig. 1 und 2 gezeigte Ausgestaltungsform bietet ein Höchstmaß an Stabilität und Flexibilität, während die große Anzahl der Ausnehmungen 5 einen ungehinderten Durchblick durch das sich drehende Schleifwerkzeug sicherstellt.

Die wabenartige Ausbildung des Trägerkörpers 2 ist mit einen Scherblatt eines Trockenrasierers vergleichbar, der Trägerkörper 2 ist bevorzugterweise aus einem Federstahl hergestellt. Der Trägerkörper kann beispielsweise eine Dicke von 0,02 bis 0,04 mm aufweisen, mit der aufgebrachten Beschichtung aus dem abrasiven Material ergibt sich dann beispielsweise eine Gesamtdicke von 0,1 bis 0,15 mm.

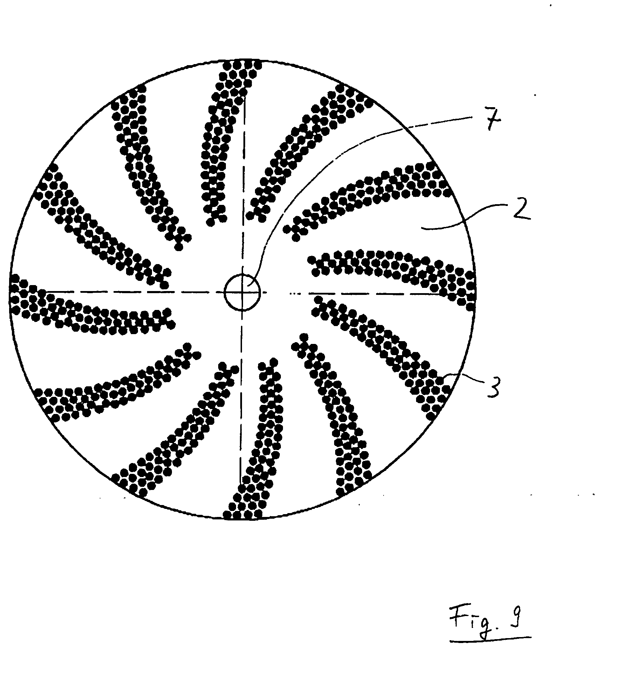

Die Fig. 3 und 4 zeigen eine weitere Ausgestältungsvariante, bei welche insbesondere die Wabenstruktur besonders deutlich ersichtlich ist. Das Schleifwerkzeug kann ganzflächig mit dem abrasiven Material belegt sein.

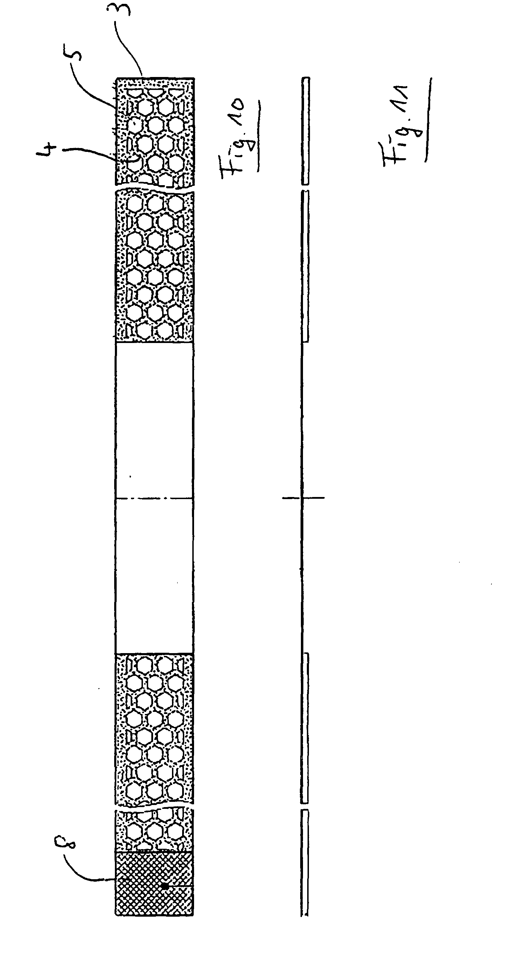

Die Fig. 5 zeigt eine abgewandelte Ausführungsform der kein Gegenstand der Erfindung ist, bei welcher die Ausnehmungen Rechtecke umfaßt, die radial angeordnet sind und somit ein gleichmäßiges Muster mit Stegen gleichmäßiger Breite bilden. Auch hierbei ist es möglich, durch Auswahl der Größe und Anordnung der einzelnen Ausnehmungen die Stabilität und Durchsichtigkeit der Schleifscheibe zu beeinflussen.

In den Fig. 6 und 7 ist ein Beispiel dargestellt das kein Gegenstand der Erfindung ist, bei welchem der mit dem abrasiven Material 3 belegte konzentrische Randbereich ohne Wabenstruktur ausgebildet ist, während sich die Wabenstruktur lediglich im konzentrischen Mittelbereich befindet. Die Wabenstruktur weist dabei Sicken-förmige Ausprägungen 6 auf, welche durch Stege 4 begrenzt werden (siehe Fig. 7). Es ist somit bei dieser Ausgestaltungsform nicht möglich, durch die Schleifscheibe zu blicken, die Ausprägungen 6 der Wabenstruktur verbessern vielmehr die Gesamt-Stabilität.

In Fig. 8 ist ein weiteres Ausführungsbeispiel einer erfindungsgemäßen Schleifscheibe gezeigt, bei welcher ein äußerer, konzentrischer Randbereich mit dem abrasiven Material 3 belegt ist. Radial innenliegend an den äußeren Randbereich sind die Waben der Wabenstruktur ausgebildet, diese umfassen, wie bereits bei den vorhergehenden Ausführungsbeispielen von Stegen vier begrenzte sechseckige Ausnehmungen 5. Die Wabenstruktur ist in Form von sechs Ecken angeordnet. Auch hierbei ergibt sich ein Höchstmaß an Stabilität, verbunden mit der Möglichkeit, einen ungehinderten Durchblick durch das rotierende Werkzeug vorzunehmen.

In Fig. 9 ist eine Variante gezeigt der kein Gegenstand der Erfindung ist, bei welcher die Wabenstrukturen bogenförmig oder schweifförmig aufgebracht sind. Das abrasive Material kann entweder im Bereich der Wabenstruktur oder im Bereich der Zwischenräume aufgebracht werden.

Die Fig. 10 und 11 zeigen eine gänzlich andere Ausgestaltung des erfindungsgemäßen Schleifwerkzeugs. Dieses ist streifenförmig ausgebildet und weist an seinem jeweiligen Randbereich eine Wabenstruktur auf, welche ebenfalls von Stegen 4 begrenzte sechseckige Ausnehmungen 5 umfaßt. Die Stege und die verbleibenden Randbereiche sind mit dem abrasiven Material 3 belegt. Der mittlere Bereich des Streifens ist weder mit abrasivem Material noch mit einer Wabenstruktur ausgestattet. Der in Fig. 10 links liegende Randbereich weist ein Kennzeichnungsfeld 8 auf, beispielsweise um eine Farbmarkierung oder ähnliches aufzubringen.

Im Rahmen der Erfindung sind so hinsichtlich der Streifen, deren Dimensionierung als auch hinsichtlich der Größe der rotierenden Schleifscheiben vielfältige Abwandlungen und Variationen möglich. Das erfindungsgemäße Schleifwerkzeug kann somit in einfachster Weise an die unterschiedlichsten Anforderungen angepaßt werden.

## Patentansprüche

1. Dentalschleifwerkzeug mit einem flachen, flexiblen plattenförmigen Trägerkörper (2) aus einem metallischen Werkstoff, welcher zumindest zum Teil an seiner Oberfläche mit abrasivem Material (3) belegt und mit Ausnehmungen (5) versehen ist, **dadurch gekennzeichnet, dass** die Ausnehmungen (5) im Wesentlichen ein gleichmässiges Muster aufweisen, wie die Ausnehmungen einer Wabenstruktur angeordnet und von Stegen (4) begrenzt sind, die mit dem abrasiven Material belegt sind, wobei die Breite der Stege (4) geringer ist als der Durchmesser der Ausnehmungen (5).

2. Schleifwerkzeug nach Anspruch 1, **dadurch gekennzeichnet, dass** die Wabenstruktur an konzentrischen Teilbereichen eines kreisplattenförmigen Trägerkörpers (2) ausgebildet ist.

3. Schleifwerkzeug nach Anspruch 1 oder 2, **dadurch gekennzeichnet, dass** die Wabenstruktur an segmentartigen Teilbereichen des Trägerkörpers (2) ausgebildet ist.

4. Schleifwerkzeug nach einem der Ansprüche 1 bis 3, **dadurch gekennzeichnet, dass** der Trägerkörper (2) im Wesentlichen ganzflächig mit der Wabenstruktur versehen ist.

5. Schleifwerkzeug nach einem der Ansprüche 1 bis 3, **dadurch gekennzeichnet, dass** der Trägerkörper (2) in einem konzentrischen Mittelbereich mit der Wabenstruktur versehen ist.

6. Schleifwerkzeug nach einem der Ansprüche 1 bis 5, **dadurch gekennzeichnet, dass** unterschiedliche konzentrische Teilbereiche mit Ausnehmungen (5) versehen sind.

7. Schleifwerkzeug nach einem der Ansprüche 1 bis 6, **dadurch gekennzeichnet, dass** der Trägerkörper (2) aus Federstahl gefertigt ist.

8. Schleifwerkzeug nach einem der Ansprüche 1 bis 7, **dadurch gekennzeichnet, dass** der Trägerkörper (2) aus Titanwerkstoff gefertigt ist.

9. Schleifwerkzeug nach einem der Ansprüche 1 bis 7, **dadurch gekennzeichnet, dass** der Trägerkörper (2) aus Nickel-Titanlegierung gefertigt ist.

10. Schleifwerkzeug nach einem der Ansprüche 1 bis 9, **dadurch gekennzeichnet, dass** das abrasive Material (3) Diamant-Partikel umfasst.

## Claims

1. Dental grinding tool comprising a flat, flexible, plate-like support body (2) made of a metallic material coated over at least part of its surface with abrasive material (3) and provided with recesses (5), **characterised in that** the recesses (5) essentially have a regular pattern, are arranged like the recesses of a honeycomb structure and are delimited by webs (4) coated with the abrasive material, the width of the webs (4) being less than the diameter of the recesses (5).

2. Grinding tool according to claim 1, **characterised in that** the honeycomb structure is formed on concentric portions of a circular plate-like support body (2).

3. Grinding tool according to claim 1 or claim 2, **characterised in that** the honeycomb structure is formed on segmental portions of the support body (2).

4. Grinding tool according to one of claims 1 to 3, **characterised in that** the support body (2) is provided with the honeycomb structure essentially over its entire surface.

5. Grinding tool according to one of claims 1 to 3, **characterised in that** the support body (2) is provided with the honeycomb structure in a concentric central region.

6. Grinding tool according to one of claims 1 to 5, **characterised in that** different concentric portions are provided with recesses (5).

7. Grinding tool according to one of claims 1 to 6, **characterised in that** the support body (2) is made of spring steel.

8. Grinding tool according to one of claims 1 to 7, **characterised in that** the support body (2) is made of titanium material.

9. Grinding tool according to one of claims 1 to 7, **characterised in that** the support body (2) is made of a nickel-titanium alloy.

10. Grinding tool according to one of claims 1 to 9, **characterised in that** the abrasive material (3) includes diamond particles.

## Revendications

1. Outil de meulage dentaire pourvu d'un corps porteur (2) plat, flexible, en forme de plaque, constitué dans un matériau métallique, qui est revêtu, au moins partiellement, sur sa surface, d'un matériau abrasif (3) et présente des évidements (5), **caractérisé en ce que** les évidements (5) constituent sensiblement un motif régulier, sont disposés comme les alvéoles d'une structure en nid d'abeilles et sont délimités par des cloisonnements (4) qui sont revêtus du matériau abrasif, la largeur des cloisonnements (4) étant inférieure au diamètre des évidements (5).

2. Outil de meulage selon la revendication 1, **caractérisé en ce que** la structure en nid d'abeilles est formée sur des zones partielles concentriques d'un corps porteur (2) en forme de plaque circulaire.

3. Outil de meulage selon la revendication 1 ou 2, **caractérisé en ce que** la structure en nid d'abeilles est formée sur des zones partielles du genre secteurs du corps porteur (2).

4. Outil de meulage selon l'une des revendications 1 à 3, **caractérisé en ce que** le corps porteur (2) est pourvu de la structure en nid d'abeilles sur sensiblement toute sa surface.

5. Outil de meulage selon l'une des revendications 1 à 3, **caractérisé en ce que** le corps porteur (2) est pourvu de la structure en nid d'abeilles dans une zone médiane concentrique.

6. Outil de meulage selon l'une des revendications 1 à 5, **caractérisé en ce que** différentes zones partielles concentriques sont pourvues d'évidements (5).

7. Outil de meulage selon l'une des revendications 1 à 6, **caractérisé en ce que** le corps porteur (2) est fabriqué en acier à ressort.

8. Outil de meulage selon l'une des revendications 1 à 7, **caractérisé en ce que** le corps porteur (2) est fabriqué en titane.

9. Outil de meulage selon l'une des revendications 1 à 7, **caractérisé en ce que** le corps porteur (2) est fabriqué en alliage nickel-titane.

10. Outil de meulage selon l'une des revendications 1 à 9, **caractérisé en ce que** le matériau abrasif (3) contient des particules de diamant.
